# EUROPEAN PATENT SPECIFICATION

(11) **EP 4 343 218 B1**
(45) Date of publication and mention of the grant of the patent: **18.11.2026**
(21) Application number: 22841180.7
(22) Date of filing: 27.06.2022
(51) Int. Cl.: F24F 11/65, F24F 11/64, F24F 11/77, F24F 11/79, F24F 13/14, F24F 110/10, F24F 140/20, F24F 140/40

(54) **AIR CONDITIONER AND CONTROL METHOD THEREOF, AND COMPUTER READABLE STORAGE MEDIUM**
KLIMAANLAGE UND STEUERUNGSVERFAHREN DAFÜR SOWIE COMPUTERLESBARES SPEICHERMEDIUM
CLIMATISEUR ET SON PROCÉDÉ DE COMMANDE, ET SUPPORT DE STOCKAGE LISIBLE PAR ORDINATEUR

(30) Priority: 16.07.2021 CN 202110809127
(43) Date of publication of application: 27.03.2024
(73) Proprietor: GD Midea Air-Conditioning Equipment Co., Ltd., Foshan, Guangdong 528311 (CN)
(72) Inventor: BAI, Junhui, Foshan, Guangdong 528311 (CN); QI, Wenduan, Foshan, Guangdong 528311 (CN)
(74) Representative: RGTH
(86) International application number: PCT/CN2022/101639
(87) International publication number: WO 2023/284542

(56) References cited:
- CN-A- 101 592 389
- CN-A- 105 180 270
- CN-A- 105 423 502
- CN-A- 107 166 625
- CN-A- 107 314 503
- CN-A- 108 195 038
- CN-A- 110 030 715
- CN-A- 110 848 910
- CN-A- 111 189 156
- CN-B- 108 050 644
- JP-A- S6 314 032

## Description

### TECHNICAL FIELD

The present application relates to the technical field of air conditioners, and in particular to a method for controlling an air conditioner, an air conditioner and a computer-readable storage medium.

### BACKGROUND

With the development of economy and technology, the application of air conditioners is becoming increasingly widespread. At present, many air conditioners have an anti-cold air function. During the anti-cold air stage of the air conditioner heating, the operation of a fan or an deflector is generally controlled based on the indoor coil temperature. When the indoor coil temperature is greater than a certain threshold, the air outlet will be opened through the deflector or the running speed of the indoor fan is increased.

However, the threshold of the current indoor coil temperature used for anti-cold air control is generally a preset default parameter, which ignore the actual physical sensation of users, resulting in insufficient accuracy of anti-cold air control and affecting user comfort. CN 111 189 156 A discloses a cold air preventing control method comprising the steps that after a defrosting mode of the air conditioner is completed, an inner ring temperature and an inner coil pipe temperature are obtained; a difference value of the inner ring temperature and the inner coil pipe temperature is judged according to the inner ring temperature and the inner coil pipe temperature; and if the difference value of the inner ring temperature and the inner coil pipe temperature is greater than a first threshold value, an inner fan is controlled to operate at the first rotating speed until the difference value of the inner ring temperature and the inner coil pipe temperature is smaller than the first threshold value. In this way, when the temperature difference of the inner ring temperature and the inner coil pipe temperature is large, the temperature of an inner coil pipe is increased through heat exchanging.

CN 107 166 625 A discloses a whole course cold air preventing control method for a variable frequency air conditioner. The whole course cold air preventing control method for the variable frequency air conditioner is characterized by comprising the following steps: (1) starting in a heating mode, entering a starting cold air preventing function, controlling air speed and when to quit the starting cold air preventing function of an indoor fan through an indoor machine mainboard in an indoor unit electric control box; (2) after the starting cold air preventing function is quitted, controlling the indoor fan to operate at a set air speed of a remote controller by the indoor machine mainboard, and controlling whether the cold air preventing function in the heating operation of the variable frequency air conditioner is effective or not.

CN 108 195 038 A an air conditioner air outflow control method comprising the steps that when a cold air preventing mode is over, it is judged that the temperature of an indoor coil pipe of the air conditioner belongs to which one of multiple preset indoor coil pipe temperature set ranges, the air gear area where an indoor draught fan of the air conditioner is located is determined on the basis of the indoor coil pipe temperature set range to which the indoor coil pipe temperature belongs, and the corresponding draught fan control logic is executed.

CN 107 314 503 A discloses a control method of an air conditioner. The air conditioner comprises an ion wind generator and a heat exchanger. The control method comprises the steps that when the air conditioner is in a heating state, a heat exchange pipe temperature of the heat exchanger and an indoor environment temperature are detected; a temperature offset is determined according to the indoor environment temperature and a preset temperature value; a difference value between a first setting temperature value and the temperature offset is calculated; and the heat exchange pipe temperature is compared with the difference value, when the heat exchange pipe temperature is greater than the difference value, the air conditioner is controlled to enter a preset cold air prevention mode, and when the heat exchange pipe temperature is less than or equal to the difference value, the ion wind generator is controlled to operate at micro voltage.

### SUMMARY

The main purpose of the present application is to provide a method for controlling an air conditioner, an air conditioner and a computer-readable storage medium, aiming to improve user comfort during the heating and anti-cold air stage of the air conditioner.

In order to achieve the above objective, the present invention provides a method for controlling an air conditioner. The method for controlling the air conditioner comprises the following steps:
obtaining an indoor ambient temperature and a current indoor heat exchanger temperature of the air conditioner during an anti-cold air stage of heating operation of the air conditioner;
determining a target heat exchanger temperature according to the indoor ambient temperature; and
in response to that the indoor heat exchanger temperature is greater than the target heat exchanger temperature, controlling an deflector of an air outlet of the air conditioner to switch from a first air guide angle to a second air guide angle,
the deflector blocks the air outlet at the first air guide angle, and the deflector opens the air outlet at the second air guide angle.

In an embodiment, the determining the target heat exchanger temperature according to the indoor ambient temperature comprises:
obtaining a current speed of the indoor fan; and
determining the target heat exchanger temperature according to the current speed of the indoor fan and the indoor ambient temperature.

In an embodiment, the determining the target heat exchanger temperature according to the current speed and the indoor ambient temperature comprises:
obtaining a reference heat exchanger temperature corresponding to the current speed of the indoor fan; determining a temperature correction parameter according to the indoor ambient temperature, the reference heat exchanger temperature is a minimum temperature that the indoor heat exchanger needs to reach when the indoor fan runs at the current speed; and
correcting the reference heat exchanger temperature according to the temperature correction parameter to obtain the target heat exchanger temperature.

In an embodiment, the determining the temperature correction parameter according to the indoor ambient temperature comprises:
determining a correction coefficient corresponding to the indoor ambient temperature, and determining a target temperature difference value between the indoor ambient temperature and a first preset temperature; and
correcting the target temperature difference value according to the correction coefficient to obtain the temperature correction parameter.

In an embodiment, after the determining the correction coefficient corresponding to the indoor ambient temperature and determining the target temperature difference value between the indoor ambient temperature and the first preset temperature, the method further comprises:
in response to that the indoor ambient temperature is less than a second preset temperature, correcting a preset temperature difference value according to the correction coefficient to obtain the temperature correction parameter; and
in response to that the indoor ambient temperature is greater than or equal to the second preset temperature, correcting the target temperature difference value according to the correction coefficient to obtain the temperature correction coefficient,
the second preset temperature is smaller than the first preset temperature, and the preset temperature difference value is greater than the target temperature difference value.

In an embodiment, in response to that the indoor heat exchanger temperature is greater than the target heat exchanger temperature, controlling the deflector of the air outlet of the air conditioner to switch from the first air guide angle to the second air guide angle comprises: controlling the indoor fan of the air conditioner to increase the speed, and
in response to that the target heat exchanger temperature is less than or equal to a set temperature threshold and the indoor heat exchanger temperature is greater than the target heat exchanger temperature, controlling an indoor fan of the air conditioner to increase the speed, and controlling the deflector to maintain the first air guide angle; or
in response to that the target heat exchanger temperature is greater than the set temperature threshold and the indoor heat exchanger temperature is greater than the target heat exchanger temperature, controlling the indoor fan of the air conditioner to increase the speed and controlling the deflector to switch from the first air guide angle to the second air guide angle.

In an embodiment, after the controlling the indoor fan of the air conditioner to increase the speed in response to that the indoor heat exchanger temperature is greater than the target heat exchanger temperature, the method further comprises:
obtaining the indoor ambient temperature and the current indoor heat exchanger temperature of the air conditioner during the anti-cold air stage of the heating operation of the air conditioner, until the speed of the indoor fan is greater than or equal to a target speed; wherein the indoor ambient temperature is an initial temperature of an indoor environment when the air conditioner starts the heating operation.

In an embodiment, the air outlet is provided with more than one deflector respectively defined as a first deflector and a second deflector, the first deflector is movably provided on an upper side of the air outlet, the second deflector is movably provided on a lower side of the air outlet,
the first air guide angle corresponding to the first deflector is defined as a first angle, the first air guide angle corresponding to the second deflector is defined as a second angle, the first angle and the second angle cooperate such that the first deflector blocks an upper area of the air outlet, and air flow blown from an air duct of the air conditioner to the air outlet is blown out from a lower area of the air outlet and blown upwards indoors after being guided by the second deflector;
the second air guide angle corresponding to the first deflector is defined as a third angle and the second air guide angle corresponding to the second deflector is defined as a fourth angle, the third angle and the fourth angle cooperate such that the first deflector opens the upper area, and the air flow in the air duct is directed downwards indoors after being guided by the first deflector and the second deflector.

In an embodiment, after the determining the target heat exchanger temperature according to the current speed of the indoor fan and the indoor ambient temperature, the method further comprises:
in response to that the indoor heat exchanger temperature is greater than the target heat exchanger temperature, obtaining an operation duration of the indoor fan at the current speed;
in response to that the operation duration is greater than or equal to a target duration, controlling the indoor fan of the air conditioner to increase the speed, and/or controlling the deflector of the air outlet of the air conditioner to switch from the first air guide angle to the second air guide angle.

Besides, in order to achieve the above objective, the present application further provides an air conditioner, comprising:
an indoor fan;
an deflector provided at an air outlet of the air conditioner; and
a control device connected to the deflector and the indoor fan, the control device comprises: a memory, a processor and a program for controlling the air conditioner stored on the memory and executable on the processor, and steps of the method for controlling the air conditioner as described above are implemented when the program for controlling the air conditioner is executed by the processor.

Besides, in order to achieve the above objective, the present application further provides a computer-readable storage medium, a program for controlling an air conditioner is stored on the computer-readable storage medium, and steps of the method for controlling the air conditioner as described above are implemented when the program for controlling the air conditioner is executed by a processor.

The present application proposes a method for controlling an air conditioner. During the anti-cold air stage of heating operation of the air conditioner, the target heat exchanger temperature is determined according to the indoor ambient temperature. When the current indoor heat exchanger temperature is greater than the target heat exchanger temperature, the indoor fan is controlled to increase the speed or the deflector is switched from the first air guide angle at which the air outlet is blocked to the second air guide angle at which the air outlet is opened. During this control process, the temperature threshold that the indoor heat exchanger temperature needs to reach is not the preset fixed parameter, which are determined based on the actual indoor ambient temperature. The indoor ambient temperature can characterize the impact of the outlet air of the air conditioner on the user's physical sensation, ensuring that the anti-cold wind control of the air conditioner can match the user's actual physical sensation, improving the accuracy of the anti-cold air control, thereby improving user comfort during the heating and anti-cold air stage of the air conditioner.

### BRIEF DESCRIPTION OF THE DRAWINGS

FIG. 1 is a schematic structural diagram of an air outlet of an air conditioner according to an embodiment of the present application.
FIG. 2 is a schematic diagram of a hardware structure involved in the operation of the air conditioner according to an embodiment of the present application.
FIG. 3 is a schematic flow chart of a method for controlling the air conditioner according to an embodiment of the present application.
FIG. 4 is a schematic detailed flowchart of step S20 in FIG. 3.

The realization of the purpose, functional features and advantages of the present application will be further described in conjunction with the embodiments, with reference to the accompanying drawings.

### DETAILED DESCRIPTION OF THE EMBODIMENTS

It should be understood that the specific embodiments described here are only used to explain the present application and are not used to limit the present application.

The main solution of the embodiment of the present application is: during the anti-cold air stage of heating operation of the air conditioner, obtaining an indoor ambient temperature and a current indoor heat exchanger temperature of the air conditioner; determining a target heat exchanger temperature according to the indoor ambient temperature; when the indoor heat exchanger temperature is greater than the target heat exchanger temperature, controlling the indoor fan of the air conditioner to increase the speed, and/or controlling the deflector of the air outlet of the air conditioner to switch from a first air guide angle to a second air guide angle for operation; the deflector blocks the air outlet at the first air guide angle, and the deflector opens the air outlet at the second air guide angle.

In the related art, the threshold of the indoor coil temperature currently used for anti-cold air control is generally a preset default parameter, which ignores the user's actual physical sensation, resulting in insufficient accuracy of anti-cold air control and affecting user comfort.

The present application provides the above-mentioned solution, aiming to improve user comfort during the heating and anti-cold air stage of the air conditioner.

The embodiment of the present application provides an air conditioner. In the embodiment of the present application, the air conditioner is a wall-mounted air conditioner. In other embodiments, the air conditioner can also be a cabinet air conditioner, a ceiling air conditioner, a mobile air conditioner, a window air conditioner, etc. according to actual needs.

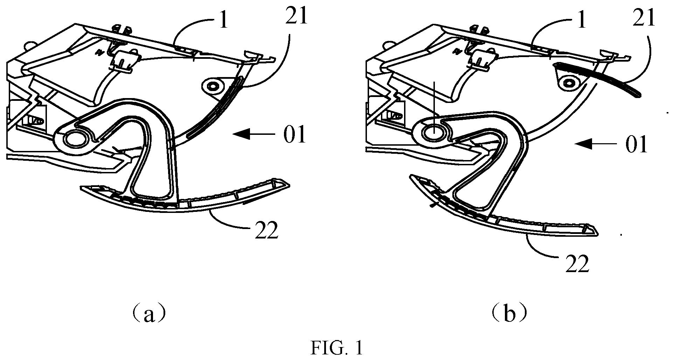

In the present embodiment, referring to FIG. 1, the air conditioner comprises a housing 1, the housing 1 is provided with an air outlet 01, and an deflector 2 is provided on the air outlet 01.

Specifically, the deflector 2 is movably provided at the air outlet 01 and has different air guide positions. For example, the deflector 2 can be rotatablely or slidably provided at the air outlet 01. When the deflector 2 is in different air guide positions, the air outlet 01 has different air outlet directions and/or air volumes.

The number of deflectors 2 can be set according to actual needs. In this embodiment, the number of deflectors 2 is two; in other embodiments, the number of deflectors 2 can also be one or more than two.

Specifically, an air duct connected to the air outlet 01 is provided in the housing 1, and an indoor heat exchanger and an indoor fan 3 are provided in the air duct. Driven by the indoor fan 3, the indoor air enters the air duct and undergoes heat exchange through the indoor heat exchanger. The heat-exchanged air is sent into the indoor environment from the air outlet 01.

Specifically, in this embodiment, the air outlet 01 is provided with more than one deflector 2 respectively defined as a first deflector 21 and a second deflector 22. The first deflector 21 is rotatablely provided on an upper side of the air outlet 01, and the second deflector 22 is rotatablely provided on a lower side of the air outlet 01.

The area of the first deflector 21 is smaller than the area of the second deflector 22. When the second deflector 22 closes or partially blocks the air outlet 01, the first deflector 21 is located on an inner side of the second deflector 22. When the second deflector 22 is located on the inner side of the first deflector 21, the airflow direction or air volume blowing towards the first deflector 21 in the air duct can be adjusted; when the first deflector 21 opens the air outlet 01, the second deflector 22 can adjust the blowing direction of the air outlet 01.

Further, the air conditioner can further comprise a temperature detection module 4. The temperature detection module 4 comprises a first temperature sensor and a second temperature sensor. The first temperature sensor is used to detect the indoor ambient temperature. In this embodiment, the first temperature sensor is provided at the return air inlet of the air duct. In other embodiments, the first temperature sensor can also be disposed in the indoor environment where the air conditioner operates. The second temperature sensor is used to detect the indoor heat exchanger temperature. In this embodiment, the second temperature sensor is located in the middle of the coil of the indoor heat exchanger. In other embodiments, the second temperature sensor can also be located at the inlet or outlet of the coil of the indoor heat exchanger, or even on the inner wall of the air duct close to the indoor heat exchanger.

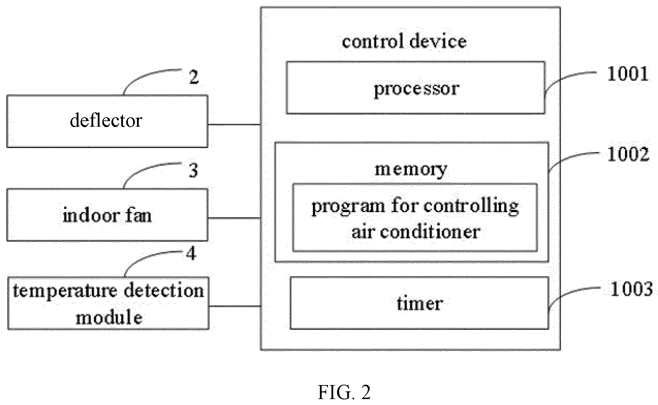

Furthermore, the air conditioner can also comprise a control device. Referring to FIG. 2, the above-mentioned deflector 2, indoor fan 3 and the temperature detection module 4 are all connected to the control device. The control device can control the operation of the deflector 2 and the indoor fan 3, and can also obtain the temperature data detected by the temperature detection module 4.

The control device comprises: a processor 1001 (such as a CPU), a memory 1002 and timer 1003, etc. The processor 1001 is connected to the memory 1002 and the timer 1003 through a communication bus. The memory 1002 can be a high-speed RAM memory or a stable memory (non-volatile memory), such as a disk memory. The memory 1002 can optionally be a storage device independent of the aforementioned processor 1001.

Those skilled in the art can understand that the device structure shown in FIG. 2 does not constitute a limitation on the device, and can comprise more or fewer components than shown, or a combination of certain components, or components arranged differently.

As shown in FIG. 2, a memory 1002, which is a computer-readable storage medium, can comprise a program for controlling the air conditioner. In the device shown in FIG. 2, the processor 1001 can be used to call the program for controlling the air conditioner stored in the memory 1002 and execute the relevant steps of the method for controlling the air conditioner in the following embodiments.

An embodiment of the present application also provides a method for controlling an air conditioner, which is used to control the above-mentioned air conditioner.

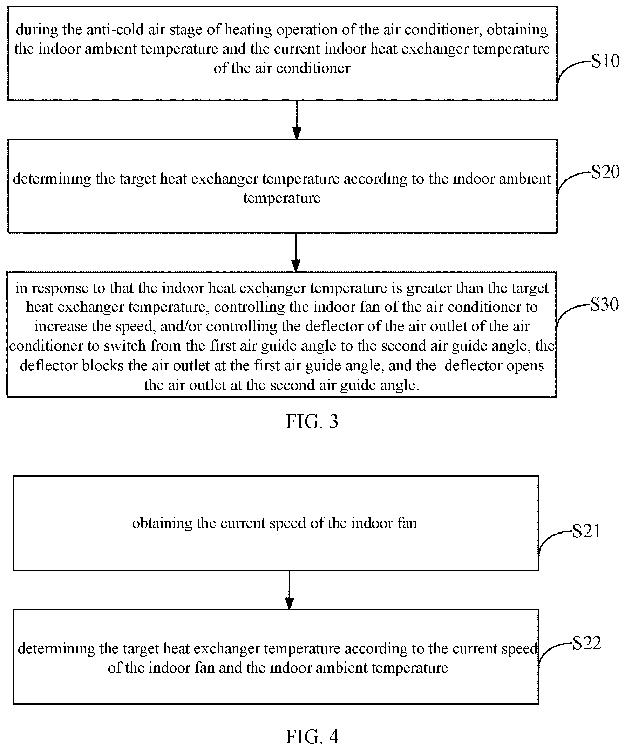

Referring to FIG. 3, a method for controlling an air conditioner according to an embodiment of the present application is proposed. In this embodiment, the method for controlling the air conditioner comprises:
step S10, during the anti-cold air stage of heating operation of the air conditioner, obtaining the indoor ambient temperature and the current indoor heat exchanger temperature of the air conditioner.

The anti-cold air stage of the heating operation can be the stage when the running time is less than or equal to the set time after the air conditioner starts heating, or the stage when the indoor heat exchanger temperature or outlet air temperature detected after the air conditioner starts heating is less than or equal to the set temperature threshold. Specifically, the air conditioner enters the anti-cold air stage when the air conditioner is powered on and starts the heating operation; or the air conditioner starts the heating operation and enters the anti-cold air stage after defrosting; or the air conditioner restarts the compressor and enter the anti-cold air stage during the heating operation.

The indoor ambient temperature can be detected through the temperature sensor provided at the return air inlet of the air conditioner. In this embodiment, the indoor ambient temperature is the initial indoor ambient temperature when the air conditioner starts the heating operation. Specifically, the indoor ambient temperature detected when the air conditioner is powered on and starts the heating operation can be used as the initial temperature here. The indoor ambient temperature detected when the air conditioner ends the defrost mode and starts the heating operation can also be used as the initial temperature here. The indoor ambient temperature detected when the air conditioner restarts the compressor after reaching the temperature and shutting down or shutting down for protection during the heating operation can also be used as the initial temperature here. In other embodiments, the indoor ambient temperature can also be the current indoor ambient temperature detected in real time.

The indoor heat exchanger temperature is specifically detected through a temperature sensor provided on the coil of the indoor heat exchanger.

Step S20, determining the target heat exchanger temperature according to the indoor ambient temperature.

The target heat exchanger temperature is specifically the minimum temperature that the heat exchanger needs to reach when the indoor fan is running at the current speed during the temperature rise of the heat exchanger of the air conditioner, which can be used to distinguish whether the temperature of the heat exchanger of the air conditioner can reach a preset heat exchanger temperature (lower than the target heat exchanger temperature) after the indoor fan increases the speed, to improve heating efficiency and avoid cold air blowing.

Different indoor ambient temperatures correspond to different target heat exchanger temperatures. Specifically, a correspondence between the ambient temperature and the heat exchanger temperature can be established in advance, and the correspondence can be in the form of a mapping relationship, a calculation relationship, etc. In the correspondence here, the heat exchanger temperature shows a decreasing trend as the ambient temperature increases. In other embodiments, the heat exchanger temperature and the ambient temperature can also have other changing trends.

Specifically, one correspondence can be preset, then the indoor ambient temperature is substituted into the correspondence, and the obtained heat exchanger temperature can be used as the target heat exchanger temperature. In addition, more than one correspondence can also be preset. Based on the actual operation of the air conditioner, one of the more than one correspondences is determined as the target correspondence. The indoor ambient temperature is substituted into the target correspondence, and the obtained heat exchanger temperature can be used as the target heat exchanger temperature.

Step S30, when the indoor heat exchanger temperature is greater than the target heat exchanger temperature, controlling the indoor fan of the air conditioner to increase the speed, and/or controlling the deflector of the air outlet of the air conditioner to switch from the first air guide angle to the second air guide angle for operation.

The deflector blocks the air outlet at the first air guide angle, and the deflector opens the air outlet at the second air guide angle.

When the indoor fan is running at an increased speed, the speed can be increased according to the preset speed adjustment parameters, or the speed can be increased according to the speed adjustment parameters determined by the actual operation of the air conditioner. For example, in this embodiment, when the current operating speed of the indoor fan is a first speed, the indoor fan can be controlled to increase to a second speed according to a preset speed increase amplitude.

At the first air guide angle, the deflector can close the air outlet or block a part of the air outlet. The angle between the air flow in the air duct and the deflector is greater than a preset angle threshold (such as 30 degrees). If a plane where the air outlet is located is defined as a reference plane, the first air guide angle is the angle between the deflector in the first air guide position and the reference plane, and the first air guide angle is less than the preset angle. Specifically, in an embodiment, the number of the deflector is one and the deflector is rotatablely provided on the lower side of the air outlet. At the first air guide angle, a gap is formed between the deflector and an upper edge of the air outlet, and the internal airflow of the air conditioner is sent upward from the gap into the room under the guidance of the deflector. At this time, the outlet air of the air conditioner cannot blow to the users moving in the area below the space, and the air conditioner can adjust the indoor air temperature. In another embodiment, the number of deflectors can be more than one, and the angle between each deflector and the reference plane is smaller than the preset angle.

At the second air guide angle, the deflector opens the air outlet, and the angle between the air flow in the air duct and the deflector is less than the preset angle threshold. Specifically, in this embodiment, at the second air outlet angle, the air outlet direction of the air outlet is parallel to the surface of the deflector, and the air outlet in the air duct blows directly into the room. If the plane where the air outlet is located is defined as the reference plane, the second air guide angle is the angle between the deflector in the second air guide position and the reference plane, and the second air guide angle is greater than the preset angle.

The first air guide angle and the second air guide angle can be preset angles, or can be angles determined according to actual operation of the air conditioner. Specifically, the second air guide angle here can be determined based on the indoor ambient temperature obtained above. The greater the indoor ambient temperature, the larger the air outlet area corresponding to the second air guide angle, and the more air volume the air conditioner blows toward the lower space.

When the deflector switches from the first air guide angle to the second air guide angle, the air outlet area of the air outlet increases, and the air outlet direction of the air outlet switches from a direction that does not blow toward the user to a direction that can blow toward the user.

Specifically, the deflector can switch from the first air guide angle to the second air guide angle according to a preset fixed movement rate or a movement rate determined according to the actual operation of the air conditioner.

In this embodiment, when the deflector is rotatablely provided on the lower side of the air outlet, during the process of the deflector switching from the first air guide angle to the second air guide angle, the air outlet direction of the air outlet sequentially changes from upward, horizontal and downward.

An embodiment of the present application proposes a method for controlling an air conditioner. In the control method, during the anti-cold air stage of the heating operation of the air conditioner, the target heat exchanger temperature is determined according to the indoor ambient temperature. When the current indoor heat exchanger temperature is greater than the target heat exchanger temperature, the indoor fan is controlled to increase the speed or the deflector is switched from the first air guide angle that blocks the air outlet to the second air guide angle that opens the air outlet. During this control process, the temperature threshold that the indoor heat exchanger temperature needs to reach is no longer a preset fixed parameter, but is determined based on the actual indoor ambient temperature. The indoor ambient temperature can characterize the impact of the outlet air of the air conditioner on the user's physical sensation, ensuring that the anti-cold air control of the air conditioner can match the user's actual physical sensation, improving the accuracy of anti-cold air control, thereby improving user's comfort during the heating and anti-cold air stage of the air conditioner.

Furthermore, based on the above embodiment, the method for controlling the air conditioner according to another embodiment of the present application is proposed. In this embodiment, referring to FIG. 4, step S20 comprises:
Step S21, obtaining the current speed of the indoor fan; and
Step S22, determining the target heat exchanger temperature according to the current speed of the indoor fan and the indoor ambient temperature.

The current speeds of different indoor fans and different initial ambient temperatures correspond to different target heat exchanger temperatures. Specifically, the correspondence between the speed, the ambient temperature and the heat exchanger temperature can be established in advance, and the correspondence can be in the form of a mapping relationship, a calculation relationship, etc. The current speed of the indoor fan and the ambient temperature are substituted into the correspondence, and the obtained heat exchanger temperature can be used as the target heat exchanger temperature. In this correspondence, the heat exchanger temperature increases with the increase of the speed, and the heat exchanger temperature decreases with the increase of the ambient temperature.

Alternatively, more than one correspondence between the speed and the air outlet temperature can be established in advance, and the correspondence can be in the form of a mapping relationship, a calculation relationship, etc. Different correspondences can correspond to different indoor ambient temperatures. Based on this, one of more than one correspondence is determined as the target correspondence according to the current indoor ambient temperature. The target outlet air temperature can be obtained by substituting the current speed of the air conditioner into the target correspondence. In addition, there can also be one correspondence between the speed and the outlet air temperature. Based on this correspondence, the reference outlet air temperature corresponding to the current speed can be determined, and the result of correcting the reference outlet air temperature according to the indoor ambient temperature is used as the target outlet air temperature.

In this embodiment, by combining the indoor ambient temperature and the current speed of the fan, the actual physical sensation of the user under the current air outlet of the air conditioner can be accurately characterized. Based on this, the target heat exchanger temperature is determined based on the indoor ambient temperature and the current speed of the fan, and the speed of the indoor fan can be further increased or the air outlet can be opened through the deflector only when the actual indoor heat exchanger temperature reaches the determined target heat exchanger temperature or above, thereby preventing the user from feeling cold due to the difference between the user's body surface temperature and the outlet air temperature of the air conditioner during the anti cold air control of the air conditioner, further improving the accuracy of the anti cold air control of the air conditioner, preventing cold air from blowing people while improving the heating efficiency of the air conditioner, and further improving user's comfort.

Specifically, in this embodiment, determining the target heat exchanger temperature according to the current speed and the indoor ambient temperature comprises: obtaining a reference heat exchanger temperature corresponding to the current speed of the indoor fan, determining a temperature correction parameter according to the indoor ambient temperature; the reference heat exchanger temperature is the minimum temperature that the indoor heat exchanger needs to reach when the indoor fan runs at the current speed; and correcting the reference heat exchanger temperature according to the temperature correction parameter and obtaining the target heat exchanger temperature.

If the current speed of the indoor fan is different, the corresponding reference heat exchanger temperature will be different. Specifically, the greater the current speed, the greater the reference heat exchanger temperature. The correspondence between the current speed of the indoor fan and the reference heat exchanger temperature can be preset, which can be a calculation relationship, a mapping relationship, etc. Based on the correspondence between the speed and the temperature, the reference heat exchanger temperature corresponding to the current speed can be determined. The target heat exchanger temperature is less than the reference heat exchanger temperature here.

Specifically, in this embodiment, different speeds of the indoor fan correspond to different temperature intervals of the heat exchanger. The greater the speed, the greater the temperature within the temperature interval of the heat exchanger. Based on this, the temperature interval of the heat exchanger corresponding to the current speed of the indoor fan can be determined, and the minimum critical temperature in the determined temperature interval of the heat exchanger is used as the target heat exchanger temperature. The maximum critical value in the temperature interval of the heat exchanger here is specifically determined based on the target speed value that the indoor fan needs to reach after increasing the speed. The specific maximum critical value is the reference heat exchanger temperature corresponding to the target speed value.

The temperature correction parameter is specifically used to characterize the difference between the sensory temperature and the heat exchanger temperature during the heating process of the air conditioner. The temperature correction parameter can comprise temperature correction amplitude or temperature correction ratio, etc. The temperature correction parameters corresponding to different indoor ambient temperatures have different values. The greater the indoor ambient temperature, the smaller the target temperature of the heat exchanger corresponding to the temperature correction parameter. For example, when the temperature correction parameter is the temperature correction amplitude, the greater the indoor ambient temperature, the greater the temperature correction amplitude, so that the corresponding target temperature of the heat exchanger is smaller. The correspondence between the indoor ambient temperature and the temperature correction parameter can be preset, and can be a mapping relationship, a calculation relationship, etc. Based on the correspondence, the temperature correction parameter corresponding to the current indoor ambient temperature can be determined. Specifically, multiple preset ambient temperatures can be preset, and corresponding temperature correction parameters can be determined based on the quantitative relationship between the indoor ambient temperature and the multiple preset ambient temperatures.

In this embodiment, the temperature correction parameter is the temperature correction amplitude. If the temperature correction parameter is defined as ΔT, and the reference heat exchanger temperature is T_{T2}, the target heat exchanger temperature is T_{T2K}=T_{T2}-ΔT. In other embodiments, the temperature correction parameter is a temperature correction ratio, and if the temperature correction parameter is defined as p (less than 1), the target heat exchanger temperature is T_{T2K} = T_{T2}*p.

In this embodiment, the minimum temperature of the indoor heat exchanger corresponding to the current speed is corrected based on the indoor ambient temperature. The indoor ambient temperature can characterize the user's physical sensation. Based on this, it is possible to prevent people from feeling cold due to the difference between the user's body surface temperature and the temperature of the heat exchanger of the air conditioner during anti-cold air control of the air conditioner, further improving the accuracy of anti-cold air control of the air conditioner, ensuring that cold air is prevented from blowing people while improving the heating efficiency of the air conditioner, and further improving user's comfort.

Further, in this embodiment, determining the temperature correction parameter according to the indoor ambient temperature comprises: determining a correction coefficient corresponding to the indoor ambient temperature, and determining a target temperature difference value between the indoor ambient temperature and a first preset temperature; and correcting the target temperature difference value according to the correction coefficient to obtain the temperature correction parameter.

Different indoor ambient temperatures correspond to different correction coefficients, and the correction coefficient corresponding to the current indoor ambient temperature can be determined through a mapping relationship or calculation formula.

In this embodiment, the correction coefficient is determined according to the ambient temperature interval in which the indoor ambient temperature is located. Specifically, the ambient temperature can be divided into multiple ambient temperature intervals in advance, and different preset correction parameters are set corresponding to different ambient temperature intervals. Based on this, the ambient temperature interval in which the current indoor ambient temperature is located among multiple preset ambient temperature intervals is determined, and the preset correction parameter corresponding to the ambient temperature interval is obtained as the current correction coefficient. In this embodiment, the greater the temperature in the ambient temperature interval, the greater the correction coefficient corresponding to the ambient temperature interval, so that the corresponding temperature correction parameter can be greater.

The target temperature difference value is specifically a parameter value that characterizes the hot and cold state of the human body when heating is started. In this embodiment, the target temperature difference value is the absolute value of the difference between the indoor ambient temperature and the first preset temperature; in other embodiments, the target temperature difference value can also be the difference value between the indoor ambient temperature and the first preset temperature. The first preset temperature is specifically a preset critical temperature of the indoor environment used to distinguish the degree of coldness felt by the human body when heating is started. If the indoor ambient temperature is greater than or equal to the first preset temperature, it indicates that the user does not feel too cold; if the indoor ambient temperature is lower than a preset temperature, it indicates that the user feels colder.

Here, the target temperature difference value is corrected based on the correction coefficient corresponding to the temperature interval where the indoor ambient temperature is located, which is conducive to obtaining the temperature correction parameter that accurately reflects the user's somatosensory conditions, thereby ensuring the accuracy of control of the subsequently obtained target temperature of the heat exchanger to the indoor fan and/or the deflector, and further improving the balance between the anti-cold air effect and heating efficiency of the air conditioner.

Further, in this embodiment, after the determining the correction coefficient corresponding to the indoor ambient temperature and determining the target temperature difference value between the indoor ambient temperature and the first preset temperature, the method further comprises: if the indoor ambient temperature is less than a second preset temperature, correcting the preset temperature difference value according to the correction coefficient to obtain the temperature correction parameter; and if the indoor ambient temperature is greater than or equal to the second preset temperature, obtaining the temperature correction coefficient after correcting the target temperature difference value according to the correction coefficient. The second preset temperature is smaller than the first preset temperature, and the preset temperature difference value is greater than the target temperature difference value.

The preset temperature difference value is specifically a preset compensation temperature value for human body temperature, which can be stored in the memory of the air conditioner.

The preset temperature difference value or target temperature difference value is defined as D, and the correction coefficient as k. In this embodiment, the temperature correction parameter ΔT satisfies: ΔT= D*k. In other embodiments, the temperature correction parameter can also be obtained by ΔT=D/k.

In this embodiment, the indoor ambient temperature is lower than the second preset temperature, indicating that the indoor temperature is too low when heating is started. At this time, the preset temperature difference value is directly used to determine the temperature correction parameter, considering the human body's somatosensory conditions, the air conditioner has a sufficiently high temperature of the heat exchanger to ensure the heating efficiency of the indoor environment under the control of the determined target temperature of the heat exchanger, thereby preventing cold air from blowing people while ensuring that the air conditioner heats the indoor environment with high heating efficiency. If the indoor ambient temperature is greater than or equal to the second preset temperature, it indicates that the indoor temperature is not too low when heating is started. At this time, the target heat exchanger temperature is obtained by combining the temperature correction parameter determined by the actual temperature difference between the indoor ambient temperature and the first preset temperature, thereby ensuring the accuracy of temperature control for the heat exchanger of the air conditioner to ensure that the anti-cold air effect and heating efficiency are both optimal.

For example, if T10 is defined as the indoor ambient temperature when the air conditioner starts heating operation, T11 as the first preset temperature, T12 as the second preset temperature, and △T as the temperature correction parameter, when T10≥T11, ΔT=(T10-T11)K1; when T12≤T10<T11, ΔT=(T11-T10)K2; when T10<T12, ΔT=4*K3; where K1 is the correction coefficient when T10≥T11; K2 is the correction coefficient when T12≤T10<T11; K3 is the correction coefficient when T10<T12, and 4 is the preset temperature difference value.

In other embodiments, it is also possible to directly use one of the target temperature difference value and the preset temperature difference value to determine the temperature correction parameter without the need for selection based on the indoor ambient temperature. It is also possible to determine one of the target temperature difference value and the preset temperature difference value as the final temperature difference value based on the actual operating conditions of the air conditioner (such as the current speed of the fan, indoor ambient temperature, current air guide angle of the deflector and/or frequency of the compressor, etc.), and correct the final temperature difference value according to the determined correction coefficient to obtain the current temperature correction parameter.

Furthermore, based on any of the above embodiments, the method for controlling the air conditioner according to another embodiment of the present application is proposed. In this embodiment, referring to FIG. 4, step S30 comprises:
step S31, in response to that the target heat exchanger temperature is less than or equal to the preset temperature threshold, when the indoor heat exchanger temperature is greater than the target heat exchanger temperature, controlling the indoor fan of the air conditioner to increase the speed for operation and controlling the deflector to maintain the operation at the first air guide angle for operation; and
step S32, in response to that the target heat exchanger temperature is greater than the preset temperature threshold, when the indoor heat exchanger temperature is greater than the target heat exchanger temperature, controlling the indoor fan of the air conditioner to increase the speed for operation and controlling the deflector to switch from the first air guide angle to the second air guide angle for operation.

The set temperature threshold is specifically a critical temperature value used to distinguish whether the outlet air temperature of the air conditioner can make the user feel cold. The set temperature threshold is a preset parameter.

When the target heat exchanger temperature is small, it means that the fan speed of the air conditioner is increased and the air is directly sent indoors, which will make the user feel cold. At this time, when the indoor heat exchanger temperature is lower than the target heat exchanger temperature, the deflector is used to maintain the block of the air outlet, while increasing the fan speed, which can increase the heat delivered by the air conditioner to the indoor environment while preventing the low-temperature air from the air conditioner from blowing to the user and affecting user comfort.

When the target heat exchanger temperature is large, it means that the fan speed of the air conditioner is increased and the air is directly sent indoors, which cannot make the user feel cold. At this time, when the indoor heat exchanger temperature is higher than the target heat exchanger temperature, the air outlet is opened through the deflector while the fan speed is increased, which can ensure a rapid increase in the outlet air temperature and improve the heating efficiency of the air conditioner for the indoor environment. If the deflector is already operating at the second air guide angle when the indoor heat exchanger temperature is higher than the target heat exchanger temperature, the deflector is controlled to maintain operating at the second air guide angle.

Further, in step S30, after the controlling the indoor fan of the air conditioner to increase the speed when the indoor heat exchanger temperature is greater than the target heat exchanger temperature, it also comprises: obtaining the indoor ambient temperature and the current indoor heat exchanger temperature of the air conditioner during the anti-cold air stage of the heating operation of the air conditioner, until the speed of the indoor fan is greater than or equal to the target speed; the indoor ambient temperature is the initial temperature of the indoor environment when the air conditioner starts heating operation.

The target speed is a target value of the required operating speed of the indoor fan when the air conditioner is running for heating. The target speed value can be specifically obtained through parameters set by the user, or can be a default parameter configured by the air conditioner, or can be a parameter determined by the air conditioner based on the monitored indoor scene conditions.

During the process of increasing the indoor fan speed, when the indoor fan speed is greater than or equal to the set speed, or when the indoor heat exchanger temperature reaches the above-mentioned condition in step S32, the deflector is controlled to switch from the first air guide angle to the second air guide angle.

In this embodiment, by gradually increasing the speed of the indoor fan to the target speed based on the indoor heat exchanger temperature and the target heat exchanger temperature determined based on the indoor ambient temperature and the current fan speed, it is beneficial to ensure that the cold air from the air conditioner does not blow people and improve the heat exchange efficiency of the air conditioner, ensuring the comfort of indoor users after heating is started.

It should be noted that during the circulation process, the current running speed of the indoor fan and the running speed after increasing the speed can be a preset speed, or can be a speed determined based on the actual operating conditions of the air conditioner. For example, the indoor fan is preset with multiple preset speeds that increase in sequence. When heating is started, the indoor fan runs at the minimum preset speed. When the outlet air temperature and indoor ambient temperature reach the preset conditions, the indoor fan can switch to run at the next preset speed. During the running of the indoor fan at the next preset speed, when the outlet air temperature and indoor ambient temperature reach the preset conditions, the indoor fan can continue to switch to run at the next preset speed, and this cycle continues until the running speed of the indoor fan is greater than or equal to the target speed value.

Further, based on any of the above embodiments, the air outlet is provided with more than one deflectors, which are defined as a first deflector and a second deflector, respectively. The first deflector is movably provided on the upper side of the air outlet, and the second deflector is movably provided on the lower side of the air outlet.

The first air guide angle corresponding to the first deflector is defined as a first angle, and the first air guide angle corresponding to the second deflector is defined as a second angle. When the first angle and the second angle are coordinated, the first deflector blocks the upper area of the air outlet, and the air flow blown from the air duct of the air conditioner to the air outlet blows out from the lower area of the air outlet and passes through the guide of the second deflector before blowing upwards indoors.

The second air guide angle corresponding to the first deflector is defined as a third angle, and the second air guide angle corresponding to the second deflector is defined as a fourth angle. When the third angle and the fourth angle are coordinated, the first deflector opens the upper area, and the air flow in the air duct is guided downwards indoors by the guide of the first deflector and the second deflector.

For example, when the air conditioner enters the anti-cold air stage, the first deflector operates at the first angle and the second deflector operates at the second angle to partially block the air outlet (as shown in FIG. 1(a)), to prevent the cold air from the air conditioner from blowing people. Based on this, when the air conditioner starts the heating operation again, the first deflector is controlled to switch from the first angle to the third angle and the second deflector is controlled to switch from the second angle to the fourth angle according to the movement rate determined above to open the air outlet (as shown in FIG. 1(b)).

Based on this, based on the air conditioner with two upper and lower deflectors at the air outlet, when the indoor heat exchanger temperature is high enough, the first angle and the second angle cooperate, the first deflector blocks the upper area of the air outlet, and the airflow blown from the air duct of the air conditioner to the air outlet blows out from the lower area of the air outlet and is guided by the second deflector before being blown upwards indoors. Therefore, the air conditioner can transport heat indoors while preventing cold air from blowing people. When the third angle and the fourth angle cooperate, the first deflector opens the upper area, and the air flow in the air duct is directed downwards indoors by the guide of the first deflector and the second deflector, thereby preventing the air conditioner from blowing cold air and improving the heating efficiency of the air conditioner for the indoor environment.

Further, based on any of the above embodiments, after the determining the target heat exchanger temperature according to the current speed of the indoor fan and the indoor ambient temperature, the method further comprises: when the indoor heat exchanger temperature is greater than the target heat exchanger temperature, obtaining an operation duration of the indoor fan running at the current speed; when the operation duration is greater than or equal to a target time, controlling the indoor fan of the air conditioner to increase the speed for operation, and/or, controlling the deflector of the air outlet of the air conditioner to switch from the first air guide angle to the second air guide angle.

The operation duration here specifically starts when the indoor fan switches from other speeds to the current speed. If the indoor fan maintains the current speed, the operation duration is continuously accumulated. The timing duration obtained from the current timing is used as the operation duration here. The target duration can be a preset fixed parameter or a parameter determined based on the current operating conditions of the air conditioner. For example, the target duration can be different depending on the current speed of the indoor fan. Specifically, the larger the current speed of the indoor fan, the shorter the target duration, and the smaller the current speed of the indoor fan, the longer the target duration. Here, when the indoor fan runs for a long enough time and the outlet air temperature of the air conditioner is high enough, it means that the outlet air temperature of the air conditioner is stable at a high state at the current speed of the indoor fan, even if the indoor fan speed is further increased or the deflector is adjusted to increase the downward supply air volume, the air conditioner has a high enough outlet air temperature to prevent cold air from blowing people. Therefore, it is determined that the preset conditions are met at this time, thereby preventing cold air and improving the heating efficiency of the air conditioner.

In addition, an embodiment of the present application also proposes a computer-readable storage medium. A program for controlling an air conditioner is stored on the computer-readable storage medium. When the program for controlling the air conditioner is executed by a processor, steps of the method for controlling the air conditioner in any one of the embodiments as described above are implemented.

It should be noted that, as used herein, the terms "include", "comprise" or any other variation thereof are intended to cover a non-exclusive inclusion, such that a process, method, article or system that comprises a list of elements not only comprises those elements, but also comprises other elements not expressly listed or that are inherent to the process, method, article or system. Without further limitation, an element defined by the statement "comprises a..." does not exclude the presence of other identical elements in the process, method, article, or system that comprises that element.

The above serial numbers of the embodiments of the present application are only for description and do not represent the advantages or disadvantages of the embodiments.

Through the above description of the embodiments, those skilled in the art can clearly understand that the methods of the above embodiments can be implemented by means of software plus the necessary general hardware platform, of course, also by hardware, but in many cases the former is better. Based on this understanding, the technical solution of the present application, in essence, or a part that contributes to the related art, can be embodied in the form of a software product. The computer software product is stored in the storage medium (such as ROM/RAM, magnetic disk, optical disk) as described above, comprising several instructions to cause a terminal device (which can be a mobile phone, computer, server, air conditioner, or network device, etc.) to execute the methods described in various embodiments of the present application.

The above are only some embodiments of the present application, and are not intended to limit the scope of the present invention which is defined by the appended claims.

## Claims

1. A control-device implemented method for controlling an air conditioner, comprising:
(S10) obtaining an indoor ambient temperature and a current indoor heat exchanger temperature of the air conditioner during an anti-cold air stage of a heating operation of the air conditioner;
(S20) determining a target heat exchanger temperature according to the indoor ambient temperature; and **characterised by** further comprising
(S30) in response to that the indoor heat exchanger temperature is greater than the target heat exchanger temperature controlling a deflector (2) of an air outlet (01) of the air conditioner to switch from a first air guide angle to a second air guide angle,
wherein the deflector (2) blocks the air outlet (01) at the first air guide angle, and the deflector (2) opens the air outlet (01) at the second air guide angle.

2. The method for controlling the air conditioner according to claim 1, wherein the (S20) determining the target heat exchanger temperature according to the indoor ambient temperature comprises:
(S21) obtaining a current speed of the indoor fan (3); and
(S22) determining the target heat exchanger temperature according to the current speed of the indoor fan (3) and the indoor ambient temperature.

3. The method for controlling the air conditioner according to claim 2, wherein the (S22) determining the target heat exchanger temperature according to the current speed and the indoor ambient temperature comprises:
obtaining a reference heat exchanger temperature corresponding to the current speed of the indoor fan (3);
determining a temperature correction parameter according to the indoor ambient temperature, wherein the reference heat exchanger temperature is a minimum temperature that the indoor heat exchanger needs to reach when the indoor fan (3) runs at the current speed; and
correcting the reference heat exchanger temperature according to the temperature correction parameter to obtain the target heat exchanger temperature.

4. The method for controlling the air conditioner according to claim 3, wherein the determining the temperature correction parameter according to the indoor ambient temperature comprises:
determining a correction coefficient corresponding to the indoor ambient temperature, and determining a target temperature difference value between the indoor ambient temperature and a first preset temperature; and
correcting the target temperature difference value according to the correction coefficient to obtain the temperature correction parameter.

5. The method for controlling the air conditioner according to claim 4, wherein after the determining the correction coefficient corresponding to the indoor ambient temperature and determining the target temperature difference value between the indoor ambient temperature and the first preset temperature, the method further comprises:
in response to that the indoor ambient temperature is less than a second preset temperature, correcting a preset temperature difference value according to the correction coefficient to obtain the temperature correction parameter; and
in response to that the indoor ambient temperature is greater than or equal to the second preset temperature, correcting the target temperature difference value according to the correction coefficient to obtain the temperature correction coefficient,
wherein the second preset temperature is smaller than the first preset temperature, and the preset temperature difference value is greater than the target temperature difference value.

6. The method for controlling the air conditioner according to claim 2, wherein the (S30) in response to that the indoor heat exchanger temperature is greater than the target heat exchanger temperature, controlling the deflector (2) of the air outlet (01) of the air conditioner to switch from the first air guide angle to the second air guide angle comprises:
controlling an in door fan (3) of the air conditioner to increase speed;
in response to that the target heat exchanger temperature is less than or equal to a set temperature threshold and the indoor heat exchanger temperature is greater than the target heat exchanger temperature, controlling the indoor fan (3) of the air conditioner to increase the speed, and controlling the deflector (2) to maintain the first air guide angle; or
in response to that the target heat exchanger temperature is greater than the set temperature threshold and the indoor heat exchanger temperature is greater than the target heat exchanger temperature, controlling the indoor fan (3) of the air conditioner to increase the speed and controlling the deflector (2) to switch from the first air guide angle to the second air guide angle.

7. The method for controlling the air conditioner according to claim 2, wherein after the in response to that the indoor heat exchanger temperature is greater than the target heat exchanger temperature, controlling the indoor fan (3) of the air conditioner to increase the speed, the method further comprises:
obtaining the indoor ambient temperature and the current indoor heat exchanger temperature of the air conditioner during the anti-cold air stage of the heating operation of the air conditioner, until the speed of the indoor fan (3) is greater than or equal to a target speed; wherein the indoor ambient temperature is an initial temperature of an indoor environment when the air conditioner starts the heating operation.

8. The method for controlling the air conditioner according to claim 6, wherein:
the air outlet (01) is provided with more than one deflector (2) respectively defined as a first deflector (21) and a second deflector (22), the first deflector (21) is movably provided on an upper side of the air outlet (01), the second deflector (22) is movably provided on a lower side of the air outlet (01),
a first air guide angle corresponding to the first deflector (21) is defined as a first angle, a first air guide angle corresponding to the second deflector (22) is defined as a second angle, the first angle and the second angle cooperate such that the first deflector (21) blocks an upper area of the air outlet (01), and an air flow blown from an air duct of the air conditioner to the air outlet (01) is blown out from a lower area of the air outlet (01) and blown upwards indoors after being guided by the second deflector (22);
a second air guide angle corresponding to the first deflector (21) is defined as a third angle and a second air guide angle corresponding to the second deflector(22) is defined as a fourth angle, the third angle and the fourth angle cooperate such that the first deflector (21) opens the upper area, and the air flow in the air duct is directed downwards indoors after being guided by the first deflector (21) and the second deflector (22).

9. The method for controlling the air conditioner according to any one of claims 2 to 8, wherein after the (S22) determining the target heat exchanger temperature according to the current speed of the indoor fan (3) and the indoor ambient temperature, the method further comprises:
in response to that the indoor heat exchanger temperature is greater than the target heat exchanger temperature, obtaining an operation duration of the indoor fan (3) at the current speed;
in response to that the operation duration is greater than or equal to a target duration, controlling the deflector (2) of the air outlet (01) of the air conditioner to switch from the first air guide angle to the second air guide angle and, if dependent on claim 6, controlling the indoor fan (3) of the air conditioner to increase speed.

10. An air conditioner, **characterized by** comprising:
an indoor fan (3);
a deflector (2) provided at an air outlet (01) of the air conditioner; and
a control device connected to the deflector (2) and the indoor fan (3),
wherein the control device comprises: a memory (1002), a processor (1001) and a program for controlling the air conditioner stored on the memory (1002) and executable on the processor (1001), and a step of a method for controlling the air conditioner according to any one of claims 1 to 9 is implemented when the program for controlling the air conditioner is executed by the processor (1001).

11. A computer-readable storage medium, **characterized in that** a program for controlling an air conditioner is stored on the computer-readable storage medium, and a step of a method for controlling the air conditioner according to any one of claims 1 to 9 is implemented when the program for controlling the air conditioner is executed by a processor (1001).

## Patentansprüche

1. In einer Steuervorrichtung implementiertes Verfahren zum Steuern einer Klimaanlage, umfassend:
(S10) Erhalten einer Innenraumumgebungstemperatur und einer aktuellen Innenraumwärmetauschertemperatur der Klimaanlage während einer Kaltluftvermeidungsphase eines Heizbetriebs der Klimaanlage;
(S20) Bestimmen einer Soll-Wärmetauschertemperatur gemäß der Innenraumumgebungstemperatur; und **dadurch gekennzeichnet, dass** das Verfahren ferner Folgendes umfasst
(S30) als Reaktion darauf, dass die Innenraumwärmetauschertemperatur größer ist als die Soll-Wärmetauschertemperatur, Steuern eines Deflektors (2) eines Luftauslasses (01) der Klimaanlage, so dass er von einem ersten Luftleitwinkel zu einem zweiten Luftleitwinkel umschaltet,
wobei der Deflektor (2) den Luftauslass (01) an dem ersten Luftleitwinkel blockiert und der Deflektor (2) den Luftauslass (01) an dem zweiten Luftleitwinkel öffnet.

2. Verfahren zum Steuern der Klimaanlage gemäß Anspruch 1, wobei der Schritt (S20) des Bestimmens der Soll-Wärmetauschertemperatur gemäß der Innenraumumgebungstemperatur Folgendes umfasst:
(S21) Erhalten einer aktuellen Drehzahl des Innenraumventilators (3); und
(S22) Bestimmen der Soll-Wärmetauschertemperatur gemäß der aktuellen Drehzahl des Innenraumventilators (3) und der Innenraumumgebungstemperatur.

3. Verfahren zum Steuern der Klimaanlage gemäß Anspruch 2, wobei der Schritt (S22) des Bestimmens der Soll-Wärmetauschertemperatur gemäß der aktuellen Drehzahl und der Innenraumumgebungstemperatur Folgendes umfasst:
Erhalten einer Referenz-Wärmetauschertemperatur entsprechend der aktuellen Drehzahl des Innenraumventilators (3);
Bestimmen eines Temperaturkorrekturparameters gemäß der Innenraumumgebungstemperatur, wobei die Referenz-Wärmetauschertemperatur eine Mindesttemperatur ist, die der Innenraumwärmetauscher erreichen muss, wenn der Innenraumventilator (3) mit der aktuellen Drehzahl läuft; und
Korrigieren der Referenz-Wärmetauschertemperatur gemäß dem Temperaturkorrekturparameter, so dass er die Soll-Wärmetauschertemperatur erhält.

4. Verfahren zum Steuern der Klimaanlage gemäß Anspruch 3, wobei das Bestimmen des Temperaturkorrekturparameters gemäß der Innenraumumgebungstemperatur Folgendes umfasst:
Bestimmen eines Korrekturkoeffizienten entsprechend der Innenraumumgebungstemperatur und Bestimmen eines Soll-Temperaturdifferenzwerts zwischen der Innenraumumgebungstemperatur und einer ersten voreingestellten Temperatur; und
Korrigieren des Soll-Temperaturdifferenzwerts gemäß dem Korrekturkoeffizienten, um den Temperaturkorrekturparameter zu erhalten.

5. Verfahren zum Steuern der Klimaanlage gemäß Anspruch 4, wobei das Verfahren nach dem Bestimmen des Korrekturkoeffizienten, der der Innenraumumgebungstemperatur entspricht, und dem Bestimmen des Soll-Temperaturdifferenzwerts zwischen der Innenraumumgebungstemperatur und der ersten voreingestellten Temperatur ferner Folgendes umfasst:
als Reaktion darauf, dass die Innenraumumgebungstemperatur geringer als eine zweite voreingestellte Temperatur ist, Korrigieren eines voreingestellten Temperaturdifferenzwerts gemäß dem Korrekturkoeffizienten, so dass er den Temperaturkorrekturparameter erhält; und
als Reaktion darauf, dass die Innenraumumgebungstemperatur größer oder gleich der zweiten voreingestellten Temperatur ist, Korrigieren des Soll-Temperaturdifferenzwerts gemäß dem Korrekturkoeffizienten, so dass er den Temperaturkorrekturkoeffizienten erhält,
wobei die zweite voreingestellte Temperatur kleiner ist als die erste voreingestellte Temperatur und der voreingestellte Temperaturdifferenzwert größer ist als der Soll-Temperaturdifferenzwert.

6. Verfahren zum Steuern der Klimaanlage gemäß Anspruch 2, wobei der Schritt (S30), bei dem als Reaktion darauf, dass die Innenraumwärmetauschertemperatur größer ist als die Soll-Wärmetauschertemperatur, der Deflektor (2) des Luftauslasses (01) der Klimaanlage so gesteuert wird, dass er vom ersten Luftleitwinkel zum zweiten Luftleitwinkel umschaltet, Folgendes umfasst:
Steuern eines Innenraumventilators (3) der Klimaanlage, so dass er die Drehzahl erhöht;
als Reaktion darauf, dass die Soll-Wärmetauschertemperatur kleiner oder gleich einem eingestellten Temperaturschwellenwert ist und die Innenraumwärmetauschertemperatur größer als die Soll-Wärmetauschertemperatur ist, Steuern des Innenraumventilators (3) der Klimaanlage, so dass er die Drehzahl erhöht, und Steuern des Deflektors (2), so dass er den ersten Luftleitwinkel beibehält; oder
als Reaktion darauf, dass die Soll-Wärmetauschertemperatur größer als der festgelegte Temperaturschwellenwert ist und die Innenraumwärmetauschertemperatur größer als die Soll-Wärmetauschertemperatur ist, Steuern des Innenraumventilators (3) der Klimaanlage, so dass er die Drehzahl erhöht, und Steuern des Deflektors (2), so dass er vom ersten Luftleitwinkel zum zweiten Luftleitwinkel umschaltet.

7. Verfahren zum Steuern der Klimaanlage gemäß Anspruch 2, wobei das Verfahren nach dem Schritt, bei dem als Reaktion darauf, dass die Innenraumwärmetauschertemperatur größer als die Soll-Wärmetauschertemperatur ist, der Innenraumventilator (3) der Klimaanlage so gesteuert wird, dass er die Drehzahl erhöht, ferner Folgendes umfasst:
Erhalten der Innenraumumgebungstemperatur und der aktuellen Innenraumwärmetauschertemperatur der Klimaanlage während der Kaltluftvermeidungsphase des Heizbetriebs der Klimaanlage, bis die Drehzahl des Innenraumventilators (3) größer oder gleich einer Solldrehzahl ist; wobei die Innenraumumgebungstemperatur eine Anfangstemperatur einer Innenraumumgebung ist, wenn die Klimaanlage den Heizbetrieb startet.

8. Verfahren zum Steuern der Klimaanlage gemäß Anspruch 6, wobei:
der Luftauslass (01) mit mehr als einem Deflektor (2) versehen ist, die jeweils als ein erster Deflektor (21) und ein zweiter Deflektor (22) definiert sind, der erste Deflektor (21) beweglich an einer Oberseite des Luftauslasses (01) vorgesehen ist, der zweite Deflektor (22) beweglich an einer Unterseite des Luftauslasses (01) vorgesehen ist,
ein dem ersten Deflektor (21) entsprechender erster Luftleitwinkel als ein erster Winkel definiert ist, ein dem zweiten Deflektor (22) entsprechender erster Luftleitwinkel als ein zweiter Winkel definiert ist, der erste Winkel und der zweite Winkel so zusammenwirken, dass der erste Deflektor (21) einen oberen Bereich des Luftauslasses (01) blockiert, und ein Luftstrom, der aus einem Luftkanal der Klimaanlage zum Luftauslass (01) geblasen wird, aus einem unteren Bereich des Luftauslasses (01) austritt und im Innenraum nach oben geblasen wird, nachdem er durch den zweiten Deflektor (22) geführt wurde;
ein zweiter Luftleitwinkel, der dem ersten Deflektor (21) entspricht, als ein dritter Winkel definiert ist und ein zweiter Luftleitwinkel, der dem zweiten Deflektor (22) entspricht, als ein vierter Winkel definiert ist, der dritte Winkel und der vierte Winkel so zusammenwirken, dass der erste Deflektor (21) den oberen Bereich öffnet und der Luftstrom im Luftkanal im Innenraum nach unten geleitet wird, nachdem er durch den ersten Deflektor (21) und den zweiten Deflektor (22) geführt wurde.

9. Verfahren zum Steuern der Klimaanlage gemäß einem der Ansprüche 2 bis 8, wobei das Verfahren nach dem Schritt (S22) des Bestimmens der Soll-Wärmetauschertemperatur gemäß der aktuellen Drehzahl des Innenraumventilators (3) und der Innenraumumgebungstemperatur ferner Folgendes umfasst:
als Reaktion darauf, dass die Innenraumwärmetauschertemperatur größer ist als die Soll-Wärmetauschertemperatur, Erhalten einer Betriebsdauer des Innenraumventilators (3) bei der aktuellen Drehzahl;
als Reaktion darauf, dass die Betriebsdauer größer oder gleich einer Soll-Dauer ist, Steuern des Deflektors (2) des Luftauslasses (01) der Klimaanlage, so dass er vom ersten Luftleitwinkel auf den zweiten Luftleitwinkel umschaltet, und, falls abhängig von Anspruch 6, Steuern des Innenraumventilator (3) der Klimaanlage, so dass er die Drehzahl erhöht.

10. Klimaanlage, **dadurch gekennzeichnet, dass** sie Folgendes umfasst:
einen Innenraumventilator (3);
einen Deflektor (2), der an einem Luftauslass (01) der Klimaanlage vorgesehen ist; und
eine Steuervorrichtung, die mit dem Deflektor (2) und dem Innenraumventilator (3) verbunden ist,
wobei die Steuervorrichtung Folgendes umfasst: einen Speicher (1002), einen Prozessor (1001) und ein Programm zum Steuern der Klimaanlage, das im Speicher (1002) gespeichert ist und auf dem Prozessor (1001) ausgeführt werden kann, und ein Schritt eines Verfahrens zum Steuern der Klimaanlage gemäß einem der Ansprüche 1 bis 9 implementiert wird, wenn das Programm zum Steuern der Klimaanlage vom Prozessor (1001) ausgeführt wird.

11. Computerlesbares Speichermedium, **dadurch gekennzeichnet, dass** ein Programm zum Steuern einer Klimaanlage auf dem computerlesbaren Speichermedium gespeichert ist und ein Schritt eines Verfahrens zum Steuern der Klimaanlage gemäß einem der Ansprüche 1 bis 9 implementiert wird, wenn das Programm zum Steuern der Klimaanlage von einem Prozessor (1001) ausgeführt wird.

## Revendications

1. Procédé mis en œuvre par un dispositif de commande pour commander un climatiseur, comprenant :
(S10) l'obtention d'une température ambiante intérieure et d'une température actuelle de l'échangeur de chaleur intérieur du climatiseur pendant une phase de protection contre l'air froid d'un fonctionnement en chauffage du climatiseur ;
(S20) la détermination d'une température cible de l'échangeur de chaleur en fonction de la température ambiante intérieure ; et
**caractérisé en ce qu'**il comprend en outre :
(S30) en réponse au fait que la température de l'échangeur de chaleur intérieur est supérieure à la température cible de l'échangeur de chaleur, la commande d'un déflecteur (2) d'une sortie d'air (01) du climatiseur pour le faire passer d'un premier angle de guidage de l'air à un deuxième angle de guidage de l'air, dans lequel le déflecteur (2) obture la sortie d'air (01) au premier angle de guidage de l'air, et le déflecteur (2) ouvre la sortie d'air (01) au deuxième angle de guidage de l'air.

2. Procédé de commande du climatiseur selon la revendication 1, dans lequel la détermination (S20) de la température cible de l'échangeur de chaleur en fonction de la température ambiante intérieure comprend :
(S21) l'obtention d'une vitesse actuelle du ventilateur intérieur (3) ; et
(S22) la détermination de la température cible de l'échangeur de chaleur en fonction de la vitesse actuelle du ventilateur intérieur (3) et de la température ambiante intérieure.

3. Procédé de commande du climatiseur selon la revendication 2, dans lequel la détermination (S22) de la température cible de l'échangeur de chaleur en fonction de la vitesse actuelle et de la température ambiante intérieure comprend :
l'obtention d'une température de référence de l'échangeur de chaleur correspondant à la vitesse actuelle du ventilateur intérieur (3) ;
la détermination d'un paramètre de correction de température en fonction de la température ambiante intérieure, dans lequel la température de référence de l'échangeur de chaleur est une température minimale que l'échangeur de chaleur intérieur doit atteindre lorsque le ventilateur intérieur (3) fonctionne à la vitesse actuelle ; et
la correction de la température de référence de l'échangeur de chaleur en fonction du paramètre de correction de température pour obtenir la température cible de l'échangeur de chaleur.

4. Procédé de commande du climatiseur selon la revendication 3, dans lequel la détermination du paramètre de correction de température en fonction de la température ambiante intérieure comprend :
la détermination d'un coefficient de correction correspondant à la température ambiante intérieure, et la détermination d'une valeur cible de différence de température entre la température ambiante intérieure et une première température prédéfinie ; et
la correction de la valeur cible de différence de température en fonction du coefficient de correction pour obtenir le paramètre de correction de température.

5. Procédé de commande du climatiseur selon la revendication 4, dans lequel, après la détermination du coefficient de correction correspondant à la température ambiante intérieure et la détermination de la valeur cible de différence de température entre la température ambiante intérieure et la première température prédéfinie, le procédé comprend en outre :
en réponse au fait que la température ambiante intérieure est inférieure à une deuxième température prédéfinie, la correction d'une valeur prédéfinie de différence de température en fonction du coefficient de correction pour obtenir le paramètre de correction de température ; et
en réponse au fait que la température ambiante intérieure est supérieure ou égale à la deuxième température prédéfinie, la correction de la valeur cible de différence de température en fonction du coefficient de correction pour obtenir le coefficient de correction de température,
dans lequel la deuxième température prédéfinie est inférieure à la première température prédéfinie, et la valeur prédéfinie de différence de température est supérieure à la valeur cible de différence de température.

6. Procédé de commande du climatiseur selon la revendication 2, dans lequel la commande (S30) du déflecteur (2) de la sortie d'air (01) du climatiseur pour le faire passer du premier angle de guidage de l'air au deuxième angle de guidage de l'air, en réponse au fait que la température de l'échangeur de chaleur intérieur est supérieure à la température cible de l'échangeur de chaleur, comprend :
la commande d'un ventilateur intérieur (3) du climatiseur pour augmenter sa vitesse ;
en réponse au fait que la température cible de l'échangeur de chaleur est inférieure ou égale à un seuil de température fixé et que la température de l'échangeur de chaleur intérieur est supérieure à la température cible de l'échangeur de chaleur, la commande du ventilateur intérieur (3) du climatiseur pour augmenter sa vitesse, et la commande du déflecteur (2) pour maintenir le premier angle de guidage de l'air ; ou
en réponse au fait que la température cible de l'échangeur de chaleur est supérieure au seuil de température fixé et que la température de l'échangeur de chaleur intérieur est supérieure à la température cible de l'échangeur de chaleur, la commande du ventilateur intérieur (3) du climatiseur pour augmenter sa vitesse et la commande du déflecteur (2) pour le faire passer du premier angle de guidage de l'air au deuxième angle de guidage de l'air.

7. Procédé de commande du climatiseur selon la revendication 2, dans lequel, après la commande du ventilateur intérieur (3) du climatiseur pour augmenter sa vitesse en réponse au fait que la température de l'échangeur de chaleur intérieur est supérieure à la température cible de l'échangeur de chaleur, le procédé comprend en outre :
l'obtention de la température ambiante intérieure et de la température actuelle de l'échangeur de chaleur intérieur du climatiseur pendant la phase de protection contre l'air froid du fonctionnement en chauffage du climatiseur, jusqu'à ce que la vitesse du ventilateur intérieur (3) soit supérieure ou égale à une vitesse cible ; dans lequel la température ambiante intérieure est une température initiale d'un environnement intérieur lorsque le climatiseur commence le fonctionnement en chauffage.

8. Procédé de commande du climatiseur selon la revendication 6, dans lequel :
la sortie d'air (01) est pourvue de plus d'un déflecteur (2), ces déflecteurs étant respectivement définis comme un premier déflecteur (21) et un deuxième déflecteur (22), le premier déflecteur (21) est disposé de manière mobile sur un côté supérieur de la sortie d'air (01), le deuxième déflecteur (22) est disposé de manière mobile sur un côté inférieur de la sortie d'air (01),
un premier angle de guidage de l'air correspondant au premier déflecteur (21) est défini comme un premier angle, un premier angle de guidage de l'air correspondant au deuxième déflecteur (22) est défini comme un deuxième angle, le premier angle et le deuxième angle coopèrent de telle sorte que le premier déflecteur (21) obture une zone supérieure de la sortie d'air (01), et qu'un flux d'air soufflé depuis un conduit d'air du climatiseur vers la sortie d'air (01) est soufflé hors d'une zone inférieure de la sortie d'air (01) et soufflé vers le haut à l'intérieur après avoir été guidé par le deuxième déflecteur (22) ;
un deuxième angle de guidage de l'air correspondant au premier déflecteur (21) est défini comme un troisième angle et un deuxième angle de guidage de l'air correspondant au deuxième déflecteur (22) est défini comme un quatrième angle, le troisième angle et le quatrième angle coopèrent de telle sorte que le premier déflecteur (21) ouvre la zone supérieure, et que le flux d'air dans le conduit d'air est dirigé vers le bas à l'intérieur après avoir été guidé par le premier déflecteur (21) et le deuxième déflecteur (22).

9. Procédé de commande du climatiseur selon l'une quelconque des revendications 2 à 8, dans lequel, après la détermination (S22) de la température cible de l'échangeur de chaleur en fonction de la vitesse actuelle du ventilateur intérieur (3) et de la température ambiante intérieure, le procédé comprend en outre :
en réponse au fait que la température de l'échangeur de chaleur intérieur est supérieure à la température cible de l'échangeur de chaleur, l'obtention d'une durée de fonctionnement du ventilateur intérieur (3) à la vitesse actuelle ;
en réponse au fait que la durée de fonctionnement est supérieure ou égale à une durée cible, la commande du déflecteur (2) de la sortie d'air (01) du climatiseur pour le faire passer du premier angle de guidage de l'air au deuxième angle de guidage de l'air et, en cas de dépendance à la revendication 6, la commande du ventilateur intérieur (3) du climatiseur pour augmenter sa vitesse.

10. Climatiseur, **caractérisé en ce qu'**il comprend :
un ventilateur intérieur (3) ;
un déflecteur (2) disposé au niveau d'une sortie d'air (01) du climatiseur ; et
un dispositif de commande relié au déflecteur (2) et au ventilateur intérieur (3),
dans lequel le dispositif de commande comprend : une mémoire (1002), un processeur (1001) et un programme de commande du climatiseur stocké dans la mémoire (1002) et exécutable sur le processeur (1001), et une étape d'un procédé de commande du climatiseur selon l'une quelconque des revendications 1 à 9 est mise en œuvre lorsque le programme de commande du climatiseur est exécuté par le processeur (1001).

11. Support de stockage lisible par ordinateur, **caractérisé en ce qu'**un programme de commande d'un climatiseur est stocké sur le support de stockage lisible par ordinateur, et qu'une étape d'un procédé de commande du climatiseur selon l'une quelconque des revendications 1 à 9 est mise en œuvre lorsque le programme de commande du climatiseur est exécuté par un processeur (1001).
